# EUROPEAN PATENT APPLICATION

(11) **EP 1 611 967 A1**
(43) Date of publication of application: **04.01.2006**
(21) Application number: 04724377.9
(22) Date of filing: 30.03.2004
(51) Int. Cl.: B09B 3/00

(54) **METHOD FOR TREATING ORGANIC MATERIAL UTILIZING SOLID-LIQUID TWO PHASE CIRCULATION PROCESS**

(30) Priority: 31.03.2003 JP 2003095416
(71) Applicant: Tama-Tlo, Ltd., Hachioji-shi, Tokyo 192-0083 (JP)
(72) Inventor: NAGAO, Norio SEAWELL CO., LTD., ,Toshima-ku, Tokyo 1710022 (JP); MATSUYAMA, Tatsushi Faculty Engineering, Soka U., Hachioji-shi, Tokyo 1928577 (JP); TODA, Tatsuki Faculty Engineering, Soka U., Hachioji-shi, Tokyo 1928577 (JP)
(74) Representative: Thun, Clemens
(86) International application number: PCT/JP2004/004573
(87) International publication number: WO 2004/087345

(57) **Abstract**

An organic matter processing method for optimizing a cleaning speed of matter inside the solid-phase reactor, making a load of organic matter on a liquid-phase reactor, and preventing solid-phase reaction from stopping due to agglutination is provided. A part of organic matter and decomposed products is disposed by using a solid/liquid two-phase circulation method for making successively passing through a solid-phase reactor for decomposing by land microorganisms and a liquid-phase reactor for decomposing by aqueous microorganisms. A part of the solid-phase reactor matter treated in the solid-phase reactor is transferred to outside the solid-phase reactor (a cleaning & solid/liquid separating portion), components dissolved in a liquid phase included in the solid-phase reactor matter transferred to outside the solid-phase reactor are cleaned with a cleaning liquid, the cleaned matter inside the solid-phase reactor is returned to the solid-phase reactor, the cleaning liquid used for the cleaning is moved to the liquid-phase reactor, and solid substances generated in the liquid-phase reactor are moved from the liquid-phase reactor to the solid-phase reactor. Cleaning is performed on 250 to 1000 ml of the solid-phase reactor matter per 1 kg of the new organic matter to be fed in a day.

## Description

### TECHNICAL FIELD

The present invention relates to a disposal method of organic matter for disposing an organic matter, in particular, organic waste and particularly relates to a disposal method of organic matter utilizing solid/liquid two-phase circulation method by making at least a part of the organic matter and decomposed products thereof successively pass through a solid-phase reactor for decomposing by land microorganisms and a liquid-phase reactor for decomposing by aqueous microorganisms.

### BACKGROUND ART

There are disadvantages pointed out on stability of disposal, sustainability of disposal and arising of odder, etc. in disposal methods of organic matter for disposing organic matter, in particular, organic waste (including organic matter, such as garbage disposed by households, hospitals, hotels, feeding service centers and other facilities; organic matter such as animal bodies; organic matter such as creatures attached to harbor equipments, ship and vessel, etc.; and organic matter such as sludge being undecomposable in water, etc. and simply referred to also as garbage, etc. hereinafter), by utilizing microorganisms.

A number of proposals for eliminating or improving the disadvantages have been made from a variety of viewpoints, and representative examples thereof will be explained.

In an organic matter disposal method described in the Japanese Unexamined Patent Publication No. 7-124538, high speed decomposition is attained by providing a function of collecting moisture evaporated from garbage without discharging it around and purifying by a liquid purification apparatus and a function of grinding solid organic matter. Also, a disposal apparatus of solid organic matter, wherein a heating function is enhanced and a discharge amount of immature compost is reduced without using a moisture adjuster, has been provided.

In an organic matter disposal method described in the Japanese Unexamined Patent Publication No. 2000-37683, there is provided a disposal apparatus having a function of removing odor of a stench gas generated in a solid-phase disposal chamber by using water, wherein the water washes away highly viscous products accumulated by a treatment by land microorganisms in the solid-phase disposal chamber at the same time, and melt organic matter are dropped into a water tank through a punching metal composing a bottom of the disposal chamber and subjected to a treatment to be purified water by aqueous microorganisms in the water tank.

However, while the organic matter disposal method described in the Japanese Unexamined Patent Publication No. 7-124538 considers to reduce residue (indicating accumulated products, which has to be taken out for discharging, remaining in a disposal apparatus in the final stage of decomposing solid-phase organic matter; and particularly indicating immature compost in a conventional garbage disposal device), such as immature compost generated at the time of disposing waste, a problem of disposal sustainability remains and ends up discharging immature compost. Namely, the disposal of organic waste was merely changing a shape of objects, such that immature compost and other products were increased by way of eliminating garbage and other organic waste.

Also, the organic matter disposal method described in the Japanese Unexamined Patent Publication No. 2000-37683 had a problem that a large amount of sludge was adversely discharged by aqueous microorganisms by way of reducing a discharge amount of immature compost.

On this point, an organic matter disposal method described in the Japanese Unexamined Patent Publication No. 2000-189932 provides an apparatus for eliminating organic waste, such as garbage and sludge: wherein as a result that aerobic and anaerobic microorganisms coexist in a porous biological treatment medium, organic waste, such as garbage and sludge, put in a first reactor is subjected to a treatment, by which organic waste as nourishment sources of aerobic microorganisms are digested by the aerobic microorganisms when aerating and agitating and organic waste as nourishment sources of anaerobic microorganisms are decomposed and digested by the anaerobic microorganisms when stop aerating and agitating; and the same treatment is furthermore performed in steps after a second reactor.

This apparatus is to eliminate organic waste by repeating the same disposal method of garbage, etc. provided by the Japanese Unexamined Patent Publication No. 7-124538 and No. 2000-37683 exactly for the number of times equal to the number of provided reactor parts. However, there is a problem that it takes time for the microorganism phase to change from the aerobic microorganisms to the anaerobic microorganisms, a speed of the decomposing treatment becomes extremely slow and, when the reactor parts are connected for a large number of stages, the apparatus becomes large in scale and the installation may become difficult.

Furthermore, the above organic matter disposal methods merely use land microorganisms and aqueous microorganisms as a single or separated decomposing processing.

Thus, a disposal method of organic matter capable of reducing organic matter, such as garbage, by improving stability and sustainability of disposing organic waste by using both of the land microorganisms and aqueous microorganisms is disclosed in the International Publication No. 02/64273 brochure.

In the disposal method of organic matter disclosed in the International Publication No. 02/64273 brochure, solid-phase reactor matter is transferred to a liquid-phase reactor by a solid/liquid material circulator, and highly viscous products generated in the solid-phase reactor are removed by cleaning. However, when continuously feeding new organic matter every day, an optimal ratio of an amount to be taken out from the solid-phase reactor for cleaning to an amount of newly fed organic matter per day (hereinafter, also referred to as a cleaning speed meaning a cleaning amount per day) was unknown.

When the cleaning speed is too high, a load of organic matter imposed on the liquid-phase reactor to treat becomes heavier than necessary and a size of the liquid-phase reactor has to be larger, which results in the organic matter disposal apparatus to be larger in size. While, when the cleaning speed is too low, highly viscous products cannot be sufficiently removed and the solid-phase reactor matter agglutinates to stop the solid-phase reaction.

Accordingly, it is necessary that the load of organic matter on the liquid-phase reactor is made as light as possible and the treatment is performed at an optimal cleaning speed so as to prevent the solid-phase reaction from stopping due to agglutination.

### DISCLOSURE OF THE INVENTION

The present invention was made in consideration of the above problems and has as an object thereof to provide an organic matter disposal method capable of improving stability and sustainability of disposing organic waste by setting an optimal cleaning speed of solid-phase reactor matter, making a load of organic matter on a liquid-phase reactor as light as possible, and preventing solid-phase reaction from stopping due to agglutination.

To attain the above object, a disposal method of organic matter of the present invention is a method of disposal of organic matter utilizing a solid/liquid two-phase circulation method by making at least a part of decomposed products of organic matter successively pass through a solid-phase reactor for decomposing by land microorganisms and a liquid-phase reactor for decomposing by aqueous microorganisms, comprising the steps of transferring a part of the matter inside the solid-phase reactor treated in the solid-phase reactor to outside the solid-phase reactor; cleaning by using a cleaning liquid components dissolved in a liquid phase among the matter inside the solid-phase reactor transferred to outside the solid-phase reactor; transferring the cleaned matter inside the solid-phase reactor back to the solid-phase reactor; putting in new organic matter to be subjected to the decomposing disposal in the solid-phase reactor or outside the solid-phase reactor so as to join the matter inside the solid-phase reactor; transferring the cleaning liquid used for cleaning the components dissolved in the liquid phase to the liquid-phase reactor; and taking out a solid substance generated in the liquid-phase reactor from the liquid-phase reactor and transferring the solid substance to the solid-phase reactor; wherein, in the step of transferring a part of the matter inside the solid-phase reactor to outside the solid-phase reactor and the step of cleaning, 250 to 1000 ml of the matter inside the solid-phase reactor is transferred to outside the solid-phase reactor and cleaned per 1 kg of the new organic matter to be put in a day.

Preferably, in the disposal method of organic matter as explained above, outside of the solid-phase reactor is a cleaning portion.

Preferably, in the method of disposal of organic matter as explained above, the cleaning portion has openings having a size of not allowing passage of the matter inside the solid-phase reactor on a bottom of a container composing the cleaning portion and has a function of separating solid and liquid for leaving solid matter in the container and discharging liquid from the container after cleaning the solid matter.

Preferably, in the method of disposal of organic matter as explained above, the liquid-phase reactor has a precipitation tank for precipitating the solid substance generated in the liquid-phase reactor, and in the step of taking out the solid substance generated in the liquid-phase reactor from the liquid-phase reactor, a liquid inside the liquid-phase reactor containing the solid substance is taken out from a precipitation portion of the precipitation tank.

The organic matter disposal method of the present invention as above disposes organic matter and at least a part of decomposed products thereof by utilizing a solid/liquid two-phase circulation method of letting them successively pass through a solid-phase reactor for decomposing by land microorganisms and a liquid-phase reactor for decomposing by aqueous microorganisms.

Here, a part of the matter in the solid-phase reactor treated in the solid-phase reactor is transferred to outside the solid-phase reactor, components being soluble to a liquid phase included in the solid-phase reactor matter transferred to outside the solid-phase reactor are cleaned by cleaning liquid, and the cleaned solid-phase reactor matter is returned to the solid-phase reactor.

Also, new organic matter to be subjected to the decomposing treatment is put in the solid-phase reactor or outside thereof so as to join the solid-phase reactor matter.

Also, the cleaning liquid used for cleaning components being soluble to a liquid phase is moved to the liquid-phase reactor, solid substances generated in the liquid-phase reactor are taken out from the liquid-phase reactor and moved to the solid-phase reactor.

Here, when a part of the solid-phase reactor matter is moved to outside the solid-phase reactor for cleaning, 250 to 1000 ml of the solid-phase reactor matter with respect to 1 kg of the newly thrown organic matter per day is moved to the outside of the solid-phase reactor to set the cleaning speed for cleaning.

### BRIEF DESCRIPTION OF DRAWINGS

FIG. 1 is a schematic view of the configuration of an organic matter disposal apparatus for carrying out an organic matter disposal method according to an embodiment of the present invention.
FIG. 2 is a view obtained by plotting a total amount of organic matter (kg) in a solid-phase reactor with respect to the number of days of an experiment (day) in an example 1.
FIG. 3 is a view obtained by plotting a total amount of ash (kg) in a solid-phase reactor with respect to the number of days of an experiment (day) in an example 2.
FIG. 4 is a view obtained by plotting a reaction speed coefficient (g-VM/VM/day) in a solid-phase reactor with respect to the number of days of an experiment (day) in an example 3.

### BEST MODE FOR CARRYING OUT THE INVENTION

Below, embodiments of the organic matter disposal method of the present invention will be explained based on the drawings.

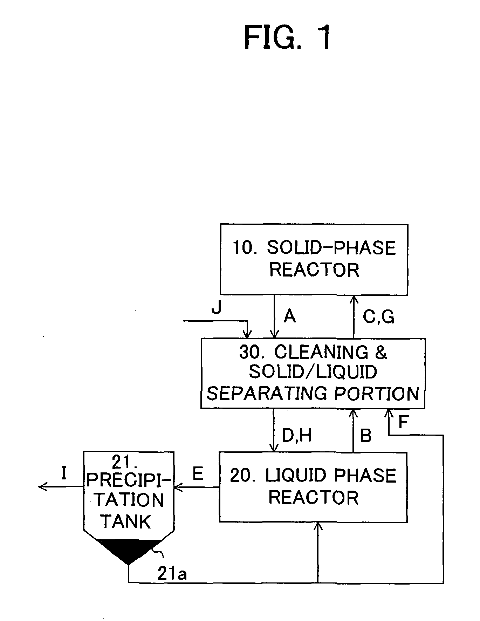

FIG. 1 is a schematic view of the configuration of an organic matter disposal apparatus for carrying out an organic matter disposal method according to the present embodiment.

The organic matter disposal apparatus shown in FIG. 1 has a solid-phase reactor 10, a liquid-phase reactor 20 and a cleaning/solid/liquid separator 30, and a material circulation system for circulating materials connects between them.

The organic matter disposal method and the organic matter disposal apparatus according to the present embodiment use a solid/liquid two-phase circulation method. Namely, at least a part of organic matter and decomposed products thereof to be subjected to the treatment is subjected to decomposing processing by successively passing through the solid-phase reactor 10 and the liquid-phase reactor 20.

Letting the organic matter and the decomposed products to be subjected to the treatment successively pass through means letting pass through the solid-phase reactor and the liquid-phase reactor by selecting the order, number of times, speed and period, etc. to be an optimal condition in accordance with a state and amount of the organic waste, respectively. At this time, it is sufficient if not all of the organic matter and the decomposed products to be subjected to the treatment passes but a part thereof passes as far as a condition capable of attaining the object and effect is satisfied.

In the solid-phase reactor 10, at least a part of the organic matter and the decomposed products to be subjected to the treatment is decomposed by land microorganisms.

Here, water-soluble highly viscous products are generated in the solid-phase decomposing process in the solid-phase reactor 10. The highly viscous products serve as a binder for combining solid matter to be processed in the solid-phase reactor 10, such as the organic matter to be subjected to the treatment, organic matter in a decomposing step, matrix and land microorganisms, (hereinafter, also referred to as solid-phase reactor matter) and bring agglutination of the solid-phase reactor matter. In the agglutinated solid-phase reactor matter, a solid-phase decomposing process ceases to proceed and the decomposing processing stops.

Components of the highly viscous products serving as a binder are not specified at this point, but it is presumed to be a group of amorphous colloidal polymer materials, such as fulvic acid and humic acid, called humus.

As shown by an arrow A, at least a part of the solid-phase reactor matter treated in the solid-phase reactor 10 is moved to the cleaning & solid/liquid separating portion 30 provided to outside the solid-phase reactor, and the solid-phase reactor matter is cleaned by a cleaning liquid in the cleaning & solid/liquid separating portion 30. Consequently, components being soluble to a liquid phase included in the solid-phase reactor matter including the above highly viscous products are dissolved in the cleaning liquid, cleaned and removed.

As the cleaning liquid, as shown by an arrow B, a liquid taken out from the liquid-phase reactor 20 or tap water, etc. may be suitably used.

A bottom surface of a container composing the cleaning & solid/liquid separating portion 30 is formed, for example, by a punching metal, etc. and provided with openings being as fine as not allowing passage of the solid-phase reactor matter. Accordingly, it has a solid/liquid separating function of leaving solid matter in the container and discharging liquid to outside the container and separates to the cleaning liquid used for cleaning the components being soluble to the liquid phase included in the solid-phase reactor matter and solid solid-phase reactor matter to be left in the container. As to the solid/liquid separating and cleaning method at this time, cleaning may be performed by putting the solid-phase reactor matter to be cleaned in a cleaning water tank filled with water or other liquid and, then, solid/liquid separation may be performed by using a mesh or a punching metal, etc.

The solid-phase reactor matter separated from liquid in the cleaning & solid/liquid separating portion 30 is moved to the solid-phase reactor as shown by an arrow C and subjected again to decomposition by a solid-phase reaction.

On the other hand, the cleaning liquid used for cleaning the components being soluble to the liquid phase in the cleaning & solid/liquid separating portion 30 is moved to the liquid-phase reactor 20 as shown by an arrow D.

In the liquid-phase reactor 20, liquid-state organic matter and the decomposed products to be subjected to the treatment including the highly viscous products eliminated from the solid-phase reactor matter by cleaning are decomposed by aqueous microorganisms in the liquid phase, finally purified, and discharged to outside the organic matter disposal apparatus.

Here, since organic matter is decomposed by an activated sludge method using aqueous microorganisms, the microorganisms and the dead bodies accumulate as the treatment proceeds and solid substances called sludge are generated. The generated solid substances are not decomposed in the liquid-phase reactor 20 and accumulate in the liquid-phase reactor 20.

In the liquid-phase reactor 20, a precipitation tank 21 is provided as a part thereof and, as shown by an arrow E, for example, a liquid overflowed from the liquid-phase reactor 20 is moved to the precipitation tank 21, or a part of the liquid in the liquid-phase reactor 20 is moved to the precipitation tank 21 by a different configuration. In the precipitation tank 21, solid substances are precipitated at the bottom of the precipitation tank 21 and form a precipitation portion 21a.

The solid substances precipitated in the precipitation tank 21 can be decomposed by solid-phase reaction by land microorganisms, so that the generated solid substances are taken out from the precipitation tank 21 as a part of the liquid-phase reactor and moved to the solid-phase reactor 10.

In the present embodiment, for example, as shown by an arrow F, a liquid-phase reactor liquid including the solid substances is taken out from the precipitation portion 21a in the precipitation tank 21 and transferred to the cleaning & solid/liquid separating portion 30. At this time, a part of the liquid-phase reactor liquid including the solid substances is returned as excessive sludge from the precipitation portion 21a of the precipitation tank 21 to the liquid-phase reactor 20.

In the cleaning & solid/liquid separating portion 30, it is separated to solid substances and liquid, and the solid substances are moved to the solid-phase reactor 10 as shown by an arrow G in the same way as in the case of cleaning the solid-phase reactor matter, while the liquid is moved to the liquid-phase reactor 20 as shown by an arrow H.

Alternately, it may be configured that, for example, in a state where the solid-phase reactor matter, wherein components being soluble to the liquid phase are cleaned by the cleaning water as explained above, remains in the container of the cleaning & solid/liquid separating portion 30, this is used as a filtering material to filtrate the liquid-phase reactor liquid including the solid substances and, while leaving the solid substances on the solid-phase reactor substances used as the filtering material, the filtrate is discharged from the container of the cleaning & solid/liquid separating portion 30 and moved to the liquid-phase reactor 20.

The solid substances remained on the solid-phase reactor substance in the cleaning & solid/liquid separating portion 30 by the filtration are moved to the solid-phase reactor together with the solid-phase reactor substances and subjected to decomposition by solid-phase reaction.

In the above organic matter disposal apparatus, a supernatant liquid at the time of precipitating the solid-phase substance in the precipitation tank 21 as it is, or after subjected to a chemical treatment in accordance with need, is discharged as clean water to the outside of the organic matter disposal apparatus as shown by an arrow I.

In the organic matter disposal method using the organic matter disposal apparatus in the present embodiment, organic matter to be subjected to the treatment is accumulative in many cases. Namely, next organic matter is newly added not after completing the decomposing processing, but new organic matter is successively added and accumulated before completing the decomposing processing.

For example, after moving a part or all of the solid-phase reactor matter treated in the solid-phase reactor to the cleaning & solid/liquid separating portion and cleaning and removing the highly viscous products, as shown by an arrow J, new organic matter to be subjected to the decomposing processing may be thrown on the solid-phase reactor matter, so that the new organic matter can join the solid-phase reactor matter.

Alternately, new organic matter may be directly put in the solid-phase reactor to join the solid-phase reactor matter.

Note that the above solid-phase reactor matter indicates all substances agitated inside the solid-phase reactor, such as fed organic matter to be subjected to the treatment and decomposed products thereof, matrix initially put in as a moisture adjustor, land microorganisms, highly viscous products, moisture and sludge conveyed from the liquid-phase reactor.

In the organic matter disposal method using the organic matter disposal apparatus in the present embodiment as explained above, when continuously feeding new organic matter every day, as obtained from examples below, 250 to 1000 ml of the solid-phase reactor matter is taken out and cleaned with respect to 1 kg of newly fed organic matter per day, which is an optimal range of a ratio of an amount of taking out from the solid-phase reactor for cleaning (cleaning speed) with respect to an amount of newly fed organic matter per day.

Below, a unit of a volume of the solid-phase reactor matter to be taken out from the solid-phase reactor for cleaning per 1 kg of newly fed organic matter per day will be expressed as ml/kg/day. The above optimal range is expressed as 250 to 1000 ml/kg/day.

When cleaning in excess of the upper limit of 1000 ml/kg/day as above, a load of organic matter imposed on the liquid-phase reactor to treat becomes larger than necessary and a size of the liquid-phase reactor has to be made large, so that the organic matter disposal apparatus becomes large in scale.

Also, when less than the lower limit of 250 ml/kg/day as above, the highly viscous products are not sufficiently removed, and the solid-phase reactor matter agglutinates to stop the solid-phase reaction.

By setting the cleaning speed to be in the above optimal range, a load of organic matter on the liquid-phase reactor can be made as light as possible and the solid-phase reaction can be prevented from stopping due to agglutination.

According to the organic matter disposal method according to the present embodiment, by cleaning the solid-phase reactor matter, moving components being soluble to a liquid phase including highly viscous products to the liquid-phase reactor to decompose by liquid-phase reaction by aqueous microorganisms, and moving solid substances (sludge) generated in the liquid-phase reactor to the solid-phase reactor to decompose by solid-phase reaction by land microorganisms, it is possible to prevent the decomposition from stopping due to bunching in the solid-phase reactor; and by setting the cleaning speed of the solid-phase reactor matter to be optimal, making a load of organic matter on the liquid-phase reactor as small as possible, and preventing the solid-phase reaction from stopping due to agglutination, stability and sustainability of disposing organic waste are improved, and a drastic reduction of the organic waste is attained.

In the above organic matter disposal apparatus explained above, the configuration of the material circulation system for circulating materials between the solid-phase reactor 10, the liquid-phase reactor 20 and the cleaning & solid/liquid separating portion 30 is not particularly limited and may be any as far as it is configured to convey materials as explained above.

The above organic matter disposal apparatus explained above is provided with a dehumidifying portion and a deodorizing portion in accordance with need and connected to the solid-phase reactor 10, the liquid-phase reactor 20, the cleaning & solid/liquid separating portion 30 and the material circulation system connecting them. As a dehumidifying condition of the dehumidifying portion and the configuration of the deodorizing portion, etc., for example, the method and configuration described in the International Publication No. 02/64273 brochure may be used.

Furthermore, as a management condition, such as a temperature, moisture and pH, in the solid-phase reactor 10 and the liquid-phase reactor 20, etc., the method and configuration described in the International Publication No. 02/64273 brochure may be preferably used.

### [Example 1]

The organic matter disposal method according to the present embodiment explained above was carried out by variously changing the amount of taking out the solid-phase reactor matter for cleaning with respect to an amount of newly fed organic matter per day.

Specifically, 5 litters of sawdust was fed in an agitating type solid-phase reactor in advance and 500 g of dog food having a content rate of 80% (93 g-VM (volatile materials) in terms of organic matter) was fed continuously every day as new organic matter to be subjected to the treatment.

Here, by variously changing the amount of solid-phase reactor matter to be taken out for cleaning per day to 0 ml, 62.5 ml, 125 ml, 187.5 ml and 250 ml, steps of taking out the solid-phase reactor matter from the solid-phase reactor, cleaning in a cleaning portion and, then, returning again to the solid-phase reactor were repeated every day. The above amounts of the solid-phase reactor matter respectively correspond to 0%, 1.25%, 2.5%, 3.75% and 5% with respect to a total amount of the solid-phase reactor matter.

The cleaning liquid used for the above cleaning was moved to the liquid-phase reactor and subjected to decomposing processing by liquid-phase reaction, but not moved to the solid-phase reactor because an amount of generated solid substances was small.

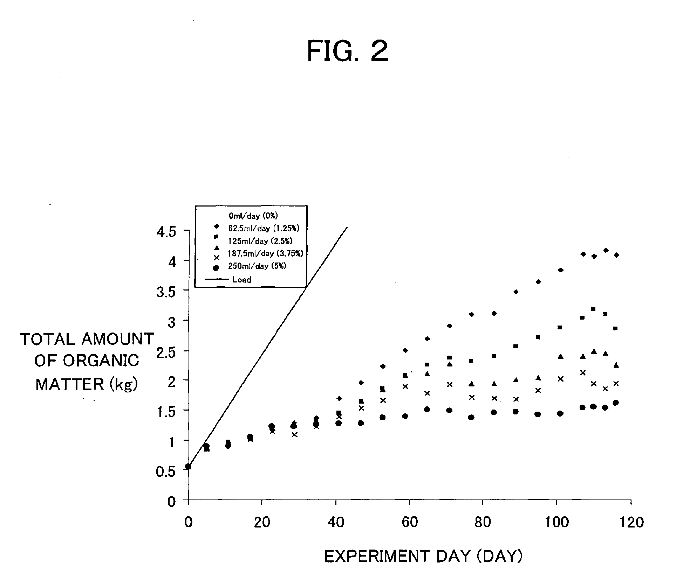

FIG. 2 is a view obtained by plotting respective amounts of taking out the solid-phase reactor matter from the solid-phase reactor for cleaning, wherein an axis of abscissa indicates a total amount (kg) of organic matter in the solid-phase reactor and an axis of ordinate indicates the number of days of the experiment (day).

Note that, in the drawing, the solid line indicates a total amount of a load of organic matter (Load) fed to the solid-phase reactor, which becomes a straight line because a certain amount is fed every day.

As shown in FIG. 2, all of the cases of 0 ml, 62.5 ml, 125 ml, 187.5 ml and 250 ml are below the straight line of an organic matter load (Load) and it is known that a treatment by solid-phase reaction is performed on the organic matter. Particularly, in the case of 125 to 250 ml, the total amount of organic matter substantially ceases to increase when the experiment days become 80 days or longer and a steady state is attained. This indicates that organic matter in an amount of being fed every day is disposed.

On the other hand, in the case of 0 ml and 62.5 ml, the total amount of organic matter continues to increase also after 80 days and stable disposal is not performed.

Accordingly, it is desirable to take out 125 to 250 ml of the solid-phase reactor matter from the solid-phase reactor for cleaning with respect to 500 g of newly fed organic matter per day, and the preferable range is presumed to be 125 to 500 ml by multiplying with a factor of safety.

When converting the above, the optimal cleaning speed is to take out 250 to 1000 ml of solid-phase reactor matter to outside the solid-phase reactor for cleaning with respect to 1 kg of newly fed organic matter per day. The optimal cleaning speed is expressed as 250 to 1000 ml/kg/day.

### [Example 2]

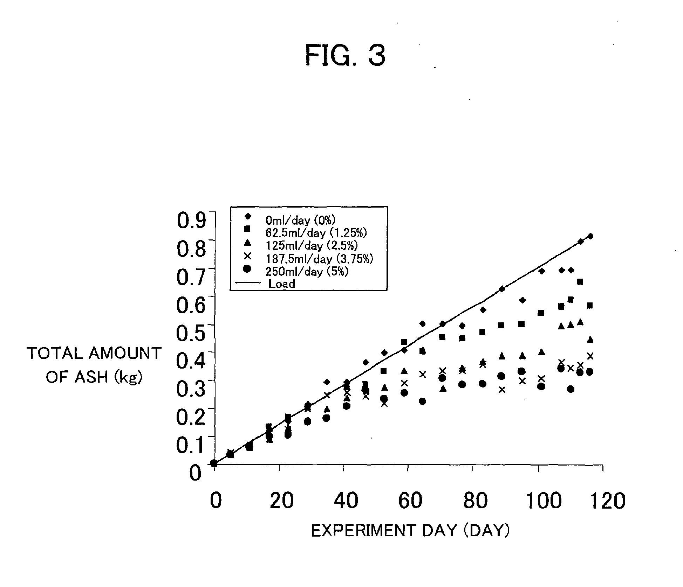

FIG. 3 is a view obtained by plotting respective amounts of taking out the solid-phase reactor matter from the solid-phase reactor for cleaning, wherein an axis of abscissa indicates a total amount (kg) of organic matter in the solid-phase reactor and an axis of ordinate indicates the number of days of the experiment (day), by measuring a total amount of ash instead of the total amount of organic matter in the experiment in the example 1.

Note that the solid line indicates an amount of ash with respect to a total amount of a load of organic matter (Load) fed to the solid-phase reactor, which becomes a straight line because a certain amount is fed every day.

As shown in FIG. 3, similar to the case of the example 1, in the case of 125 to 250 ml, the total amount of ash substantially ceases to increase when the experiment days become 80 days or longer exhibiting that a steady state is attained. This indicates that ash included in organic matter to be fed every day is extracted to a liquid phase by cleaning, so that an amount of ash in the solid phase does not increase and a steady state is attained.

On the other hand, in the case of 0 ml and 62.5 ml, the total amount of ash continues to increase and stable disposal is not performed.

Accordingly, similar to the case of the example 1, a conclusion is obtained that the optimal cleaning speed is to take out 250 to 1000 ml of solid-phase reactor matter to outside the solid-phase reactor for cleaning with respect to 1 kg of organic matter to be newly fed per day.

### [Example 3]

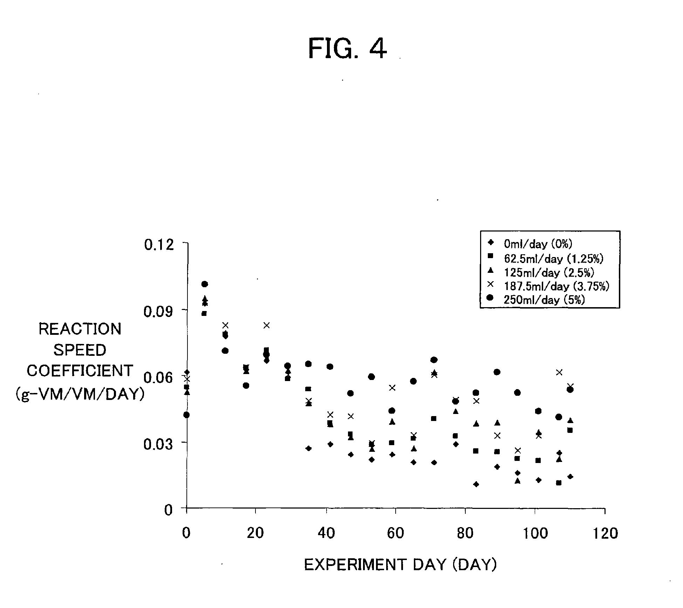

FIG. 4 is a view obtained by plotting for respective cleaning amounts by taking out solid-phase reactor matter from the solid-phase reactor in the experiment explained in the example 1, wherein a reaction speed coefficient (g-VM/VM/day) as an index of a decomposing speed, that is, a value obtained by dividing the decomposing speed in the solid-phase reactor by an organic matter amount, is obtained and indicated on the axis of ordinate, and the axis of abscissa indicates the number of days of the experiment (day).

From FIG. 4, it is learnt that the reaction speed coefficient in the solid-phase reactor gradually becomes high as the cleaning speed becomes high.

### [Example 4]

In the experiment explained in the example 1, density based on the wet weight, density based on the dry amount, density based on the organic matter amount and density based on the ash amount of the solid-phase reactor matter were measured, respectively.

Density based on the wet weight of the solid-phase reactor matter was 0.3 to 0.7 (kg-Wt/L;kg-Wt (wet weight) was the wet weight).

Density based on the dry amount of the solid-phase reactor matter was 0.2 to 0.45 (kg-DS/L;kg-DS (dry solid) was weight of dry substance).

Density based on the organic matter amount of the solid-phase reactor matter was 0.16 to 0.45 (kg-VM/L;kg-VM was organic matter weight).

Density of the ash amount of the solid-phase reactor matter was 0.02 to 0.07 (kg-Ash/L;kg-Ash was ash weight).

By using the density based on the wet weight, density based on the dry amount, density based on the organic matter amount and density based on the ash amount respectively obtained as above, an optimal range (250 to 1000 ml/kg/day) of the cleaning speed expressed by a volume of the solid-phase reactor matter was converted. The units are kg-Wt/kg/day, kg-DS/kg/day, kg-VM/kg/day and kg-Ash/kg/day, respectively.

Obtained respective values are shown in Table 1.

Regarding any one of the dry amount, organic matter amount and ash amount, when setting to be in a range of the cleaning speed shown in Table 1, it becomes equivalent to set to be in a cleaning speed range expressed by a volume of the solid-phase reactor matter required in the organic matter disposal method of the present invention, and the effects of the present invention can be obtained.

| Unit of Cleaning Speed of Solid-Phase Reactor Matter | Density | Range of Optimal Cleaning Speed |
|---|---|---|
| Speed Based on Volume (ml/kg/day) | | 250 to 1000 ml/kg/day |
| Speed Based on Wet Weight (g-Wt/kg/day) | 0.3 to 0.7 kg-Wt/L | 75 to 700 g-Wt/kg/day |
| Speed Based on Dry Amount (g-DS/kg/day) | 0.2 to 0.45 kg-DS/L | 50 to 450 g-DS/kg/day |
| Speed Based on Organic Matter Amount (g-VM/kg/day) | 0.16 to 0.45 kg-VM/L | 40 to 450 g-VM/kg/day |
| Speed Based on Ash Amount (g-Ash/kg/day) | 0.02 to 0.07 kg-Ash/L | 5 to 70 g-Ash/kg/day |

According to the organic matter disposal method according to the present embodiment, a residue amount can be extremely reduced when disposing organic waste comparing with that in the related art of discharging a large amount of immature compost.

Also, a significant effect of the present invention is that disposal of organic matter by using microorganisms, which has been very unstable in the related art, is stabilized to be a practical use level.

Furthermore, it is extremely safe disposal of not generating any pathogenic bacteria or chemical substances giving bad odor and adverse effects on human body.

Furthermore, as a social effect, garbage can be discharged to outside households by using a disposer, so that it is possible to be freed from conventional cumbersome processing.

Since the disposal method of the present invention is capable of changing organic matter to inorganic matter, water discharged therefrom does not generate any sludge.

Note that, the organic matter disposal of the present invention can be applied to a highly convenient embodiment, such that a disposer is used in respective general households to discharge organic matter typified by garbage to outside the households and, then, the organic matter is collected in units of several hundreds of households and disposed successively by the disposal method and facility according to the present invention.

The organic matter disposal method of the present invention does not convert "water contamination and organic matter as garbage" to "other organic matter called sludge", but it focuses on "changing to inorganic matter". Namely, a principle of the disposal of the present invention is to perform a maximized reaction of changing to inorganic matter by using microorganisms of both of liquid and solid phases in a step, wherein microorganisms decompose and proliferate. Therefore, substances decomposed and made to be inorganic matter by the organic matter disposal method of the present invention are taken into a global material circulation as they are, discharged to rivers, seas and the air and circulated in a harmless form for the global ecological system.

A generation amount of sludge in Japan is nothing compared with a garbage amount and accounts for a large part of all organic waste, and elimination of the sludge problem may be pursued in future prospects of the present invention.

Note that the present invention is not limited to the embodiment and a variety of modifications may be freely and suitably made. Also, a variety of any preferable objects may be subjected to the disposal treatment.

For example, the organic matter disposal method of the present invention can be applied for disposing sludge, etc. Disposal of organic matter by the conventional activated sludge method merely converts water contamination to other organic matter called sludge (dead bodies of microorganisms). Therefore, there has been a problem that a large amount of sludge is generated and accumulated. Currently, a vast amount of disposal cost is spent for disposing the sludge and, also from this aspect, the concept of the disposal method of the present invention of not generating any sludge from garbage counts a lot.

According to the organic matter disposal method of the present invention, stability and sustainability of disposing organic waste can be improved by setting a cleaning speed of solid-phase reactor matter to be optimal, reducing a load of organic matter on a liquid-phase reactor as much as possible, and preventing a solid-phase reaction from stopping due to agglutination.

### Industrial Applicability

The organic matter disposal method of the present invention can be applied to a method of disposing sludge and other methods of disposing organic matter, such as organic waste.

## Claims

1. A method of disposal of organic matter utilizing a solid/liquid two-phase circulation method by making at least a part of decomposed products of organic matter successively pass through a solid-phase reactor for decomposing by land microorganisms and a liquid-phase reactor for decomposing by aqueous microorganisms, comprising the steps of:
transferring a part of the matter inside the solid-phase reactor treated in the solid-phase reactor to outside the solid-phase reactor,
cleaning components dissolved in a liquid phase among the matter inside the solid-phase reactor transferred to outside the solid-phase reactor by using a cleaning liquid,
transferring the cleaned matter inside the solid-phase reactor back to the solid-phase reactor,
putting in new organic matter to be subjected to the decomposing disposal in the solid-phase reactor or outside the solid-phase reactor so as to join the matter inside the solid-phase reactor,
transferring the cleaning liquid used for cleaning the components dissolved in the liquid phase to the liquid-phase reactor,
taking out a solid substance generated in the liquid-phase reactor from the liquid-phase reactor and transferring the solid substance to the solid-phase reactor,
wherein, in the step of transferring a part of the matter inside the solid-phase reactor to outside the solid-phase reactor and the step of cleaning, 250 to 1000 ml of the matter inside the solid-phase reactor is transferred to outside the solid-phase reactor and cleaned per 1 kg of the new organic matter to be put in a day.

2. A method of disposal of organic matter as set forth in claim 1, wherein outside the solid-phase reactor is a cleaning portion.

3. A method of disposal of organic matter as set forth in claim 2, wherein the cleaning portion has openings having a size of not allowing passage of the matter inside the solid-phase reactor on a bottom of a container composing the cleaning portion and has a function of separating solid and liquid for leaving solid matter in the container and discharging liquid from the container after cleaning the solid matter.

4. A method of disposal of organic matter as set forth in claim 1, wherein
the liquid-phase reactor has a precipitation tank for precipitating the solid substance generated in the liquid-phase reactor, and
in the step of taking out the solid substance generated in the liquid-phase reactor from the liquid-phase reactor, a liquid inside the liquid-phase reactor containing the solid substance is taken out from a precipitation portion of the precipitation tank.
